(19) Europäisches Patentamt
European Patent Office
Office européen des brevets

(11) Veröffentlichungsnummer: **0 010 646 B2**

(12) **NEUE EUROPÄISCHE PATENTSCHRIFT**

(45) Veröffentlichungstag der neuen Patentschrift:
**13.11.85**

(51) Int. Cl.⁴: **B 29 C 51/00, C 08 K 3/22, C 08 K 3/26**

(21) Anmeldenummer: **79103840.9**

(22) Anmeldetag: **08.10.79**

(54) **Verfahren zur Herstellung von Tiefziehkörpern mit einer gleichmässig matten Oberfläche aus Vinylchloridpolymerisat.**

(30) Priorität: **13.10.78 DE 2844687**

(43) Veröffentlichungstag der Anmeldung:
**14.05.80 Patentblatt 80/10**

(45) Bekanntmachung des Hinweises auf die Patenterteilung:
**05.01.83 Patentblatt 83/1**

(45) Bekanntmachung des Hinweises auf die Entscheidung über den Einspruch:
**13.11.85 Patentblatt 85/46**

(84) Benannte Vertragsstaaten:
**BE CH DE FR GB IT NL SE**

(73) Patentinhaber: **HOECHST AKTIENGESELLSCHAFT, Postfach 80 03 20, D-6230 Frankfurt am Main 80 (DE)**

(72) Erfinder: **Stadler, Herbert, Forellenweg 7, D-8300 Altdorf (DE)**
Erfinder: **Weiss, Ernst, Dr., Beckstrasse 35, D-8262 Altötting (DE)**
Erfinder: **Zentner, Erich, Zwieselweg 10, D-8261 Burgkirchen/Alz (DE)**

(56) Entgegenhaltungen:
**DE - A - 1 815 891
DE - A - 2 032 313
DE - A - 2 455 166
DE - A - 2 629 742
DE - B - 1 504 522
DE - B - 2 112 030
US - A - 3 361 704**

**J.D. Roberts and M.C. Caserio, Basic Principles of Organic Chemistry, W.A. Benjamin Inc., New York/Amsterdam (1965), page 1095
H. Kainer, Polyvinylchlorid und Vinylchlorid-Mischpolymerisate, Springer-Verlag Berlin/Heidelberg/New York (1965), Seiten 322 u. 323**

## Beschreibung

Die Erfindung betrifft ein Verfahren zur Herstellung von Tiefziehkörpern mit einer gleichmäßig matten Oberfläche durch Warmtiefziehen einer Folie aus Vinylchloridpolymerisat, Gleitmitteln, Stabilisatoren und Füllstoffen.

Ein solches Verfahren ist aus der DE-A-1 815 891 bekannt. Die zum Tiefziehen verwendete Folie wird dadurch erhalten, daß zunächst eine Mischung aus Vinylchloridpolymerisaten mit unterschiedlichen K-Werten und gegebenenfalls üblichen Wärmestabilisatoren, Montanwachs als Gleitmittel und einer relativ geringen Menge an Titandioxid als Füllstoff bereitet wird, wobei das Vinylchloridpolymerisat mit dem höheren K-Wert in vorplastifiziertem Zustand den übrigen Mischungsbestandteilen zugesetzt wird, und dann die Mischung bei einer solchen Temperatur kalandriert oder extrudiert wird, bei der nur das Vinylchloridpolymerisat mit dem niedrigen K-Wert vollständig plastifiziert ist. Dieses Verfahren, das bezüglich Erreichung einer gleichmäßig matten Oberfläche auf den Einsatz von zwei Vinylchloridpolymerisaten mit unterschiedlichen K-Werten beruht, ist wegen der erforderlichen Vorplastifizierung des Vinylchloridpolymerisates mit dem höheren K-Wert und wegen der Einhaltung einer ganz bestimmten Verarbeitungstemperatur relativ kompliziert und apparativ aufwendig.

In der DE-B-1 504 522 wird ein Verfahren zum Herstellen von Folien mit mattierter Oberfläche beschrieben, bei dem eine Formmasse, bestehend im wesentlichen aus einem faserbildenden, verstreckbaren, thermoplastischen Polymerisat und Füllstoffen wie Calciumcarbonat, Glimmer, Kieselsäure, Calciumsilicat, Glas, Ton und Titandioxid mit einer Korngröße von 0,3 bis 20 µ in einer Menge von 1 bis 25 Gew.-%, bezogen auf das Gewicht des Polymerisates, zu einer Folie verarbeitet und die Folie vorzugsweise biaxial verstreckt wird. Es wird mehrfach hervorgehoben, daß man durch das biaxiale Verstrecken aus der durchsichtigen, glatten und glänzenden Ausgangsfolie eine Folie mit matter Oberfläche erhält, die durch weiteres zweiachsiges Verstrecken weiß und undurchsichtig wird.

Wird aus der in der DE-B-1 504 522 beschriebenen Formmasse mit Polyethylenterephthalat als Polymerisat eine Folie bereitet und die Folie tiefgezogen, so weist der erhaltene Formkörper, wie Versuche gezeigt haben, nahezu alle Abstufungen von glänzend glatt über matt bis weiß auf. Die in dieser Druckschrift beschriebenen Folien sind demnach für die Herstellung von Tiefziehkörpern mit einer gleichmäßig matten Oberfläche ganz und gar ungeeignet.

Die Aufgabe der Erfindung liegt nun darin, ein Verfahren zur Herstellung von Tiefziehkörpern mit einer gleichmäßig matten Oberfläche vorzuschlagen. Bei diesem Verfahren sollen Polyvinylchloridfolien eingesetzt werden können, die durch die üblichen Folien-Herstellungsverfahren ohne weitere apparative oder sonstige Aufwendungen bereitet worden sind.

Diese Aufgabe wird bei dem eingangs genannten Verfahren durch die im kennzeichnenden Teil des Patentanspruchs angegebenen Merkmale gelöst.

Es war nicht zu erwarten, daß mit der erfindungsgemäß vorgeschlagenen matten Folie Tiefziehkörper mit einer gleichmäßig matten Oberfläche erhalten werden, nachdem der DE-A-1 815 891 zu entnehmen ist, daß dazu Folien erforderlich sind, die im wesentlichen aus zwei Polyvinylchlorid-Arten mit unterschiedlichen K-Werten bestehen und nach einem speziellen Verfahren hergestellt worden sind, und daß dabei Füllstoffen keinerlei Bedeutung zukommt. Die erfindungsgemäß erhaltenen Formkörper besitzen überraschenderweise Mattigkeit auch an den Stellen (Kanten, Rundungen und dergleichen), an denen durch den Umformprozeß die Dicke der eingesetzten matten Folie relativ stark vermindert worden ist.

Unter dem Begriff Tiefziehkörper werden jene räumlichen Gebilde verstanden, die durch Warmtiefziehen hergestellt werden können, beispielsweise Becher, Dosen, Decken- und Wandkassetten, Schachteln, Behälter für Verpackungszwecke, Dekorationsartikel und ähnliche Gebrauchsgegenstände. Die Herstellung von Tiefziehkörpern durch Warmtiefziehen ist an sich bekannt. Die eingesetzte Folie erfährt dabei in der Regel eine Flächenverdünnung von 99 bis 10%, vorzugsweise von 80 bis 40%, bezogen auf die ursprüngliche Foliendicke. Dieser Flächenverdünnung liegen Tiefziehverhältnisse von Höhe zu Durchmesser von 1 : 10 bis 1 : 0,5 zugrunde. Die Temperatur der Polyvinylchloridfolie liegt beim Tiefziehen vorzugsweise bei 105 bis 120° C.

Unter Vinylchloridpolymerisat werden Homopolymerisate, Copolymerisate oder Pfropfcopolymerisate des Vinylchlorids verstanden, die in der Regel durch Polymerisation in Emulsion, Suspension oder in Masse hergestellt worden sind und einen K-Wert nach Fikentscher von 50 bis 80, vorzugsweise von 55 bis 70, aufweisen. Die Vinylchlorid-Homo-, Vinylchlorid-Co- und Vinylchlorid-Pfropfcopolymerisate und ihre Mischungen können sogenannte Schlagzähharze wie Acrylnitril-Butadien-Styrol-, Methylmethacrylat-Butadien-Styrol- und Methylmethacrylat-Acrylnitril-Butadien-Styrol-Polymerisate oder chloriertes Polyethylen und gegebenenfalls sogenannte Fließhilfsmittel (processing aids) wie niedermolekulares Polymethylmethacrylat enthalten, wobei der Anteil der Schlagzähharze zweckmäßigerweise 1 bis 20 Gew.-%, vorzugsweise 3 bis 15 Gew.-%, und der Anteil an Fließhilfsmittel in der Regel 1 bis 5 Gew.-%, jeweils bezogen auf Vinylchloridpolymerisat, beträgt.

Als Füllstoffe werden erfindungsgemäß Kreide (Calciumcarbonat) oder Aluminiumoxid mit einem mittleren Teilchendurchmesser von 1,5 bis 10 µm, vorzugsweise 3 bis 6 µm, in einer Menge von 10 bis 35 Gew.-%, vorzugsweise 10 bis 20 Gew.-%, bezogen auf das Gewicht des Vinylchloridpolymerisates, eingesetzt.

2

0 010 646

Die für das erfindungsgemäße Verfahren einzusetzende Polyvinylchloridfolie enthält neben den Füllstoffen noch Stabilisatoren (Wärmestabilisatoren) und Gleitmittel sowie gegebenenfalls zweckmäßige weitere Verarbeitungshilfsstoffe und Additive. Als Wärmestabilisatoren sind beispielsweise geeignet Mono- und Dialkylzinnverbindungen mit 1 bis 10 C-Atomen im Alkylrest, bei denen die restlichen Wertigkeiten des Zinns über Sauerstoff und/oder Schwefelatome mit weiteren Substituenten verbunden sind; Aminocrotonsäureester; Harnstoff- und Thioharnstoffderivate; $\alpha$-Phenylindol; Salze der Erdalkalimetalle, des Zinks und Cadmiums mit aliphatischen Carbonsäuren oder Oxycarbonsäuren. Bevorzugt werden Organo-Zinn-Schwefel-Stabilisatoren, wie Di-Methylzinn-bis-(2-ethylhexylthioglycolat), Di-n-Butylzinn-bis-(2-ethylhexylthioglycolat), Di-n-Octylzinn-bis-(2-ethylhexylthioglycolat). Die Stabilisatoren werden in Mengen von 0,2 bis 3 Gew.-%, bezogen auf Kunststoff, eingesetzt; sie können auch in Mischung untereinander sowie mit üblichen Costabilisatoren und Antioxidantien eingesetzt werden.

Als Gleitmittel können beispielsweise ein oder mehrere höhere aliphatische Carbonsäuren und Oxycarbonsäuren sowie deren Ester und Amide, wie Stearinsäure, Montansäure, Bis-stearoyl- bzw. Bis-palmitoyl-ethylendiamin, Montansäureester von Ethandiol oder 1,3-Butandiol, gegebenenfalls teilweise verseift; Fettalkohole mit mehr als 10 C-Atomen, sowie deren Ether; niedermolekulare Polyolefine sowie Hartparaffine, in Mengen von 0,1 bis 4 Gew.-%, bezogen auf Kunststoff, verwendet werden.

Die Herstellung der erfindungsgemäß zu verwendenden Folien erfolgt in bekannter Weise durch inniges Vermischen des Vinylchloridpolymerisates, Wärmestabilisators, Gleitmittels und der Kreide oder des Aluminiumoxids sowie gegebenenfalls weiterer Verarbeitungshilfsstoffe und Additive in einer üblichen Mischvorrichtung, beispielsweise in einem Schnellmischer. Anschließend wird aus der Mischung nach dem Kalanderverfahren eine Folie erzeugt. Die Dicke der gleichmäßig matten Folie beträgt 70 bis 500 µm, vorzugsweise 100 bis 250 µm.

Die mit dem neuen Verfahren erhaltenen Formkörper werden insbesondere zu Dekorationszwecken (z. B. bei der Möbelerzeugung und im Bausektor) sowie als Gebrauchsgegenstände wie Becher, Schachteln, Behälter und dergleichen, bei denen eine gleichmäßige Mattigkeit erwünscht ist, verwendet.

Anhand der folgenden Beispiele wird die Erfindung noch näher erläutert:

## Beispiel 1

Einer üblichen Polyvinylchlorid-Hartmischung zur Herstellung von Kalanderfolien, bestehend aus

| | |
|---|---|
| 85 Gew.-Teilen | eines Vinylchlorid-Homopolymerisates vom K-Wert 57, hergestellt nach dem Masse-Polymerisations-Verfahren, |
| 15 Gew.-Teilen | eines Emulsions-Pfropfmischpolymerisates des Vinylchlorids auf ein Mischpolymerisat von Butadien und Acrylnitril aus 93 Gew.-% Vinylchlorid und 7 Gew.-% Butadien und Acrylnitril im Gewichtsverhältnis 90 : 10, hergestellt nach dem Verfahren der deutschen Patentschrift 1 226 790, |
| 1,5 Gew.-Teilen | Gleitmittel und |
| 1,5 Gew.-Teilen | Zinnstabilisator, |

wurden jeweils 10 und 20 Gew.-Teile Kreide mit einem mittleren Teilchendurchmesser von 4,5 µm zugemischt. Die Mischungen wurden in einem Schnellmischer gemischt, auf einem Mischwalzwerk bei einer Temperatur von 160 bis 180° C vorgeliert und dann bei Temperaturen von 185 bis 210° C auf einem 4-Walzenkalander in üblicher Weise zu Folien mit einer Dicke von 250 µm kalandriert. An den Folien wurde der Oberflächenglanz nach DIN 47 530 unter einem Lichteinfallwinkel von 85° geprüft. Aus den Folien wurden anschließend durch Tiefziehen bei einer Folientemperatur von 105° C und einem Ziehverhältnis von Höhe zu Durchmesser = 1 : 2 Becher hergestellt. An den Becherböden (das sind Stellen relativ starker Verdünnung, das heißt Verminderung der ursprünglichen Foliendicke) wurden ebenfalls die Glanzwerte nach obiger Norm gemessen. Bereits mit dem unbewaffneten Auge konnte festgestellt werden, daß die aus der gleichmäßig matten Folie erhaltenen Becher eine gleichmäßig matte Oberfläche besaßen. Das gleiche Ergebnis lieferten die Glanzwert-Messungen.

## Beispiel 2

Analog Beispiel 1 wurden der angegebenen Polyvinylchlorid-Hartmischung jeweils 10 und 20 Gew.-Teile Füllstoff mit einem mittleren Teilchendurchmesser von jeweils 2,8 µm und 6,0 µm zugegeben, wobei einmal Kreide, ein andermal Aluminiumoxid als Füllstoff eingesetzt wird. Aus den Mischungen wurden, ebenso wie im Beispiel 1, Folien hergestellt, die Folien zu Bechern tiefgezogen und die Oberflächen-Glanzwerte gemessen. Das Ergebnis hinsichtlich Mattigkeit war das gleiche wie bei Beispiel 1.

3

**Patentanspruch**

Verfahren zur Herstellung von Tiefziehkörpern mit einer gleichmäßig matten Oberfläche durch Warmtiefziehen einer Folie aus Vinylchloridpolymerisat, Gleitmitteln, Stabilisatoren und Füllstoffen, dadurch gekennzeichnet, daß eine Folie tiefgezogen wird, die als Füllstoff Kreide oder Aluminiumoxid mit einem mittleren Teilchendurchmesser von 1,5 bis 10 µm in einer Menge von 10 bis 35 Gew.-%, bezogen auf das Gewicht des Vinylchloridpolymerisates, enthält, wobei die Folie durch Kalandrieren der Mischung aus Vinylchloridpolymerisat, Gleitmitteln, Stabilisatoren und dem Füllstoff bei einer Temperatur der Kalanderwalzen im Bereich von 185 bis 210° C hergestellt worden ist und eine Dicke von 70 bis 500 µm hat.

**Claim**

A process for the manufacture of deep-drawn shaped bodies having a uniformly matt surface by thermically deep-drawing a sheet consisting of a vinyl chloride polymer, a lubricant, a stabiliser, and a filler, characterised in that a sheet is deep-drawn which contains chalk or aluminum oxide as a filler in an amount of 10 to 35% by weight, relative to the weight of vinyl chloride polymer, having an average particle diamter of 1.5 to 10 µm, said sheet being made by calandering a mixture consisting of said vinyl chloride polymer, lubricant, stabiliser, and said filler at a temperature of 180 to 210° C of the calender rolls, and said sheet having a thickness of 70 to 500 µm.

**Revendication**

Procédé de préparation de corps d'emboutissage profond ayant une surface régulièrement mate par emboutissage profond à chaud d'une feuille constituée de polymère du chlorure de vinyle, de lubrifiants, de stabilisants et de charges, caractérisé en ce qu'on soumet à un emboutissage profond une feuille qui contient comme charge de la craie ou de l'oxyde d'aluminium ayant un diamètre moyen de particules de 1,5 à 10 µm dans une quantité de 10 à 35% en poids par rapport au poids du polymère du chlorure de vinyle, cette feuille ayant été fabriquée par calandrage du mélange constitué de polymère du chlorure de vinyle, de lubrifiants, de stabilisants et de la charge, à une température des cylindres calandreurs de 185 à 210° C et ayant une épaisseur de 70 à 500 µm.